# EUROPÄISCHE PATENTSCHRIFT

(11) **EP 2 434 499 B1**
(45) Veröffentlichungstag und Bekanntmachung des Hinweises auf die Patenterteilung: **22.11.2017**
(21) Anmeldenummer: 10178748.9
(22) Anmeldetag: 23.09.2010
(51) Int. Cl.: H01B 3/47, B32B 5/28, B32B 27/36

(54) **Laminierter Schichtaufbau zur Herstellung eines Isolationsmaterials**
Laminated layer construction for producing an insulating material
Montage de couche laminé destiné à la fabrication d'un matériau d'isolation

(43) Veröffentlichungstag der Anmeldung: 28.03.2012
(73) Patentinhaber: ABB AG, 68309 Mannheim (DE)
(72) Erfinder: Nelges, Jörg, 74821 Mosbach (DE)

(56) Entgegenhaltungen:
- WO-A1-2009/109216
- DE-A1- 2 323 923
- DE-C1- 19 635 362
- US-A- 3 843 481

## Beschreibung

Die Erfindung betrifft einen laminierten Schichtaufbau zur Herstellung eines flächigen Isolationsmaterials sowie ein daraus hergestelltes Isolationsmaterial.

Es ist allgemein bekannt, dass bei der Konstruktion hochspannungstechnischer Komponenten, wie beispielsweise Trockentransformatoren, bedarfsweise Isolationsmittel zu verwenden sind. Wenn beispielsweise zwei betriebsmäßig auf unterschiedlichen Spannungsebenen betriebene Komponenten, wie eine Ober- und Unterspannungswicklung eines Transformators, einen zu geringen Abstand zueinander aufweisen, kann es zu einem elektrischen Durchschlag kommen. Um dieses zu verhindern, sind sogenannte Isolationsbarrieren üblich, welche die elektrisch zu überwindende Überschlagsstrecke verlängern und damit einen sicheren Betrieb der Komponente gewährleisten. Im Falle hohlzylindrisch ineinander verschachtelter Unter- und Oberspannungswicklungen eines Hochspannungstrockentransformators, beispielsweise für eine Spannungsebene zwischen 6kV und 30kV, wird eine derartige Barriere als dünnwandiger isolierender Hohlzylinder ausgeführt, welcher im radialen Grenzbereich zwischen der üblicherweise radial innen liegenden Unterspannungswicklung und der radial außen befindlichen Oberspannungswicklung angeordnet ist.

Dieser Zylinder besteht beispielsweise aus einem dünnwandigen und mehrschichtigen Laminat. Als Laminat bezeichnet man einen Werkstoff oder ein Produkt, das aus zwei oder mehreren flächig miteinander verklebten oder anderweitig verbundenen Schichten besteht. Diese Schichten können aus gleichen oder unterschiedlichen Materialien bestehen. Ein für den zuvor genannten Isolationszweck geeignetes Laminat weist beispielsweise folgenden exemplarischen Schichtaufbau auf, wobei die Spannungsfestigkeit im Wesentlichen durch die Polyesterfolie bestimmt ist:
- 8µm ausgehärtetes Polyesterimidharz oder Epoxidharz
- 50µm Polyestervlies
- 350µm Polyesterfolie
- 50µm Polyestervlies
- 350µm Polyesterfolie
- 50µm Polyestervlies
- 8µm ausgehärtetes Polyesterimidharz oder Epoxidharz

Es ist aber auch die Verwendung einer mehrlagig verklebten Polyesterfolie denkbar, beispielsweise bis zu 4 Lagen von je 350µm Schichtdicke.

Ein derartiges bandähnliches Laminat wird mittels entsprechender Laminiereinrichtungen rollenweise hergestellt. Um dieses in die gewünschte Hohlzylinderform einer Isolationsbarriere für einen Hochspannungstransformator zu überführen wird ein Bandabschnitt einer gewünschten Länge und Breite manuell in eine Hohlzylinderform gebogen und mit einem temperaturbeständigen Klebeband an einer Überlappungsstelle fixiert. Bezüglich des gesamten Aufbaus ist bevorzugter Weise eine Temperaturbeständigkeit der Temperaturklasse F, also 155°C, gewünscht, wie es bei Trockentransformatoren im Hochspannungsbereich üblich ist.

Nachteilig hieran ist, dass der erstgenannte Laminataufbau mit seiner Gesamtschichtdicke von ca. 1 mm über eine eingeschränkte Stabilität verfügt, welche für die Herstellung von Isolationshohlzylindern von größeren Transformatoren, beispielsweise für eine Leistung von 5MW und höher, nicht geeignet ist. Das Hinzufügen von weiteren Schichten mit einer daraus resultierenden höheren Gesamtschichtdicke ist jedoch mit einem erhöhten Aufwand und Materialeinsatz verbunden, was sich als nachteilig erweist. Als ebenso nachteilig erweist es sich, dass eine derartige Isolationsbarriere zu der Brandlast eines Transformators beiträgt.

Die alternativ beschriebene vierlagige Polyesterfolie weist zwar eine geringfügig höhere mechanische Stabilität auf, ist jedoch aufgrund einer fehlenden Beschichtung der Außenseiten des Folienverbundes nur für Temperaturklasse B, also 130°C, geeignet.

Ausgehend von diesem Stand der Technik ist es Aufgabe der Erfindung, ein Isolationsmaterial bzw. ein geeignetes Vorprodukt hierzu anzugeben, welches sich durch eine erhöhte Stabilität bzw. durch einen reduzierten Anteil an brennbaren Materialien auszeichnet.

Diese Aufgabe wird gelöst durch einen laminierten Schichtaufbau zur Herstellung eines flächigen Isolationsmaterials der eingangs genannten Art. Dieser ist gekennzeichnet durch folgende Reihenfolge flächiger und aufeinander angeordneter Einzelschichten:
- Harz im B-Zustand
- Glasgewebe
- Kernschicht aus Polyesterfolie
- Glasgewebe
- Harz im B-Zustand wobei die Kernschicht zwei Lagen einer ca. 350µm dicken Polyesterfolie aufweist. Die Grundidee der Erfindung besteht darin, statt einer alternierenden Abfolge von Polyesterfolie und Polyestervlies eine Kernschicht aus Polyesterfolie zu verwenden, welche beidseitig von einer Schicht Glasgewebe mit einer angrenzenden Schicht Harz im B-Zustand umgeben ist.

B-Zustand eines Harzes bedeutet, dass der Aushärtungsprozess des Harzes bereits begonnen aber anschließend gewollt unterbrochen wurde, so dass sich das Harz im Zustand der unvollständigen Polymerisierung befindet. B-Zustand eines Harzes kann aber auch bedeuten, dass dieses durch entsprechende Erwärmung auf eine Aufschmelztemperatur von beispielsweise 80°C und anschließendes Abkühlen in einen festen Zustand übergegangen ist, ohne dass die eigentliche chemische Reaktion der Polymerisation bereits initiiert wurde. In einem solchen Zustand lässt sich das Harz bei einer entsprechenden Temperatur wieder aufschmelzen, wobei die eigentliche Polymerisation bei einer Temperatur oberhalb der Aufschmelztemperatur stattfindet.

Erfindungsgemäß wird das Harz beim Laminieren im flüssigen A-Zustand beispielsweise mittels einer Walze mit entsprechender Oberflächenstruktur aufgetragen, wobei es dann in einem anschließenden Trocknungsprozess beispielsweise durch einen Ofen geführt wird, der eine so hohe Temperatur aufweist, dass das Harz dann zwar in den B-Zustand übergeht, aber eine Polymerisation im Wesentlichen vermieden ist.

Das Laminieren eines vielschichtigen Aufbaus kann sowohl mehrere Lagen in einem einzigen Laminierungsprozess umfassen, aber auch nur das Laminieren von jeweils zwei Schichten zu einem Zwischenprodukt, das anschließend wieder auf eine Rolle aufgewickelt wird. Im Weiteren wird dieses Zwischenprodukt dann zusammen mit weiteren Schichten laminiert.

Ein fertig laminierter Schichtaufbau verfügt noch nicht über die gewünschte Endstabilität, hierzu ist er noch auf eine Backtemperatur zu erhitzen, so dass sich das Harz von seinem B-Zustand ausgehend wieder verflüssigt und eine Verbindung mit der Glasgewebeschicht eingeht, indem es durch eine Kapillarwirkung zumindest teilweise in dessen Zwischenräume gesogen wird. Durch die entsprechend hohe Backtemperatur wird der Polymerisationsprozess gestartet und nach dem darauf folgenden Abkühlprozess ist die vollständige Polymerisation des Harzes erfolgt und ein Isolationsmaterial mit einer entsprechend hohen Stabilität gebildet. Durch die Anordnung der dann entstandenen Glasgewebeverbundschichten an den beiden Außenseiten des flächigen Isolationsmaterials ist auch bei geringer Gesamtschichtdicke eine hohe Stabilität des Gesamtaufbaus gewährleistet. Zudem ist in vorteilhafter Weise der Anteil an brennbarem Material in der Laminatschicht reduziert worden, weil das Glasgewebe im Gegensatz zu dem nunmehr entfallenen Polyestervlies nicht zur Brandlast beiträgt.

In einer bevorzugten Ausgestaltungsform des laminierten Schichtaufbaus beträgt das Verhältnis der Dicke einer Harzschicht zu der Dicke einer daran angrenzenden Glasgewebeschicht etwa 3:20. In flüssigem Zustand ist die Menge des Harzes dann in vorteilhafter Weise auf das Volumen des zu füllenden Hohlraumes im Glasgewebe angepasst.

Gemäß einer besonders bevorzugten Erfindungsvariante weisen die Harzschichten eine Dicke von jeweils ca. 15µm und die Glasgewebeschichten eine Dicke von jeweils ca. 100µm auf. Hier ist - unter Berücksichtigung des zuvor genannten Verhältnisses - eine auf eine Gesamtdicke des flächigen Isolationsmaterials von ca. 1mm angepasste Dicke der beiden äußeren Schichten erreicht. Hierbei ist die Dicke der Harzschichten von jeweils 15µm als untere Grenze anzusehen, welche zu einer hinreichenden Stabilität zusammen mit der jeweiligen Glasgewebeschicht führt. Selbstverständlich sind auch höhere Schichtdicken, beispielsweise 50µm möglich und sinnvoll. In diesem Fall würde die Harzschicht nicht vollständig in das Glasgewebe eingesogen werden und die Oberfläche wäre entsprechend glatter.

Eine noch weiter gesteigerte Dicke der Glasgewebeschicht würde sich nur bei einer gesteigerten Gesamtschichtdicke als sinnvoll erweisen, würde aber auch in diesem Fall selbstverständlich nicht zur Brandlast beitragen. Je nach Kundenanforderungen ist es auch denkbar, unter Inkaufnahme einer erhöhten Gesamtschichtdicke die Dicke der Polyesterfolie für eine reduzierte Brandlast weiter zu reduzieren und durch eine entsprechend erhöhte Dicke der Glasgewebeschichten auszugleichen. Die erhöhte Gesamtschichtdicke ergäbe sich dann aus der geringeren Isolationsfähigkeit des Glasgewebes gegenüber der Polyesterfolie.

In diesem Zusammenhang erweist es sich als vorteilhaft, wenn die Kernschicht zwei Lagen einer ca. 350µm dicken Polyesterfolie aufweist. 350µm ist eine handelsübliche Schichtdicke, wobei Folien mit einer erhöhten Schichtdicke von beispielsweise 500µm deutlich schwerer herzustellen sind. Von daher ist es am günstigsten, den Isolationskern aus zwei Lagen einer 350µm dicken Folie zu fertigen. Zusammen mit den Schichtdicken der beiden Außenlagen resultiert dann eine Gesamtschichtdicke von knapp 1 mm. Bei höheren Gesamtschichtdicken sind die jeweiligen Schichtdicken entsprechend hochzuskalieren, bzw. durch eine entsprechend erhöhte Anzahl an Einzelschichten nachzubilden. Die Herstellung eines derartigen Laminataufbaus erfolgt dann - je nach Vorhandensein entsprechender Laminiereinrichtungen - zweckmäßigerweise zunächst in Form eines Schichtaufbaus Polyesterfolie, Glasgewebeschicht und Harz im B-Zustand, wobei anschließend zwei Lagen dieses Zwischenproduktes polyesterfolienseitig miteinander verklebt bzw. laminiert werden.

Es hat sich gezeigt, dass Phenol-Epoxypräkondensat oder Bisphenol A Harz besonders geeignet sind, als Harz im B-Zustand verwendet zu werden. Diese lassen sich besonders gut beschichten und weisen auch geeignete Temperatureigenschaften auf. Hier sei explizit auf die beiden Produkte Hexion Epenol 9968-LG als geeignetes Phenol-Epoxypräkondensat bzw. Albesiano 8045/A als geeignetes Bisphenol A Harz verwiesen. In ausgebackenem und ausgehärtetem Zustand muss einerseits eine Temperaturbeständigkeit entsprechend Temperaturklasse F, also größer als 155°C gegeben sein, andererseits ist aus Fertigungsgründen eine Backtemperatur erstrebenswert, welche nicht allzu sehr über der Temperaturbeständigkeit liegt, beispielsweise im Bereich 120°C bis 180°C, üblicherweise um 140°C.

Bevorzugter Weise weist der laminierte Schichtaufbau eine hohlzylindrische Form auf, welche zudem auf den zwischen Unter- und Oberspannungswicklung gebildeten Innenraums eines zu fertigenden Transformators angepasst ist. Eine derartige hohlzylindrische Form wird dadurch bereitgestellt, dass ein entsprechend breiter und langer Abschnitt eines erfindungsgemäßen Laminates beispielsweise von einer Rolle, auf dem es angeliefert wird, abgeschnitten wird und zunächst mit Klammern in der entsprechenden Form fixiert wird, wobei aus späteren Isolationsgründen eine entsprechende Überlappung der beiden Enden an ihrer Verbindungsstelle vorzusehen ist, beispielsweise wenige Zentimeter. Auf diese Weise lässt sich der Hohlzylinder bei der Fertigung einer entsprechenden Transformatorwicklung leicht als Isolationsbarriere in diese integrieren. Ein Zylinderdurchmesser beträgt - je nach Nennleistung des Transformators und je nach Wicklungsaufbau - beispielsweise 0,5m - 2m.

Vor dem Einsatz des laminierten Schichtaufbaus als Isolationsmaterial ist dieser noch temporär auf wenigstens die Backtemperatur zu erhitzen um so durch Bildung der äußeren Glasgewebeverbundschichten bzw. der vollständigen Polymerisation des Harzes das endgültige Isolationsmaterial mit der gewünschten Festigkeit herzustellen.

Als besonders geeignet für die temporäre Erhitzung hat sich ein Temperaturbereich von 120 °C bis 180 °C in einen Zeitraum von wenigstens 30min erwiesen.

Im Rahmen dieser Erfindung ist auch eine Hochspannungswicklung vorgesehen, mit einer Unterspannungswicklung, welche hohlzylindrisch um eine Wickelachse angeordnet ist, und mit einer Oberspannungswicklung, welche in einem radialen Abstand hohlzylindrisch um dieselbe Wickelachse angeordnet ist. Die Hochspannungswicklung ist dadurch gekennzeichnet, dass in dem durch den radialen Abstand gebildeten Hohlraum ein in der Form angepasster laminierter Schichtaufbau nach einem der Ansprüche 1 bis 6 angeordnet ist.

Der laminierte Schichtaufbau ist als Isolationsbarriere zwischen der Unter- und Oberspannungswicklung vorgesehen. Aufgrund des überwiegend radialsymmetrischen Aufbaus einer derartigen Wicklung ist auch der Zwischenraum zwischen den beiden Wicklungen zylinderähnlich ausgeprägt. Von daher ist eine hohlzylindrische Form des laminierten Schichtaufbaus eine geeignete Form, um einfach in die Gesamtwicklung integrierbar zu sein. Selbstverständlich ist es aber auch denkbar, eine derartige hohlzylindrische Form aus mehreren schalenartigen Segmenten zusammenzusetzen.

Die endgültige elektrische Funktionalität einer derartigen Wicklung ist jedoch erst dann gegeben, wenn diese noch - entweder als Einzelwicklung oder auch zusammen in einem komplett montierten Transformator - temporär auf wenigstens eine Backtemperatur erhitzt wurde, so dass ein vollständig polymerisierter Glasgewebeverbundstoff an den Außenseiten des Hohlzylinders gebildet ist. Eine derartige temporäre Erhitzung bei der Herstellung eines Transformators ist gegebenenfalls ohnehin notwendig, beispielsweise wenn für die Leiterisolation der Unterspannungswicklung ebenfalls ein Harz im B-Zustand verwendet wird, wie beispielsweise Prepreg, was dem Fachmann jedoch bekannt ist. Auf diese Weise ist kein zusätzlicher Erhitzungsvorgang für den als Isolationsbarriere verwendeten Hohlzylinder notwendig. In ebenso vorteilhafter Weise entfällt auch das Fixieren des Hohlzylinders mit einem temperaturbeständigem Klebeband, weil nach dem Erhitzen durch das anfangs wieder flüssige Harz auch eine Verbindung an der Verbindungsstelle des in Zylinderform gerollten Laminates ergibt, welche nach dem Aushärten über eine hohe Festigkeit verfügt.

Weitere vorteilhafte Ausgestaltungsmöglichkeiten sind den weiteren abhängigen Ansprüchen zu entnehmen.

Anhand der in den Zeichnungen dargestellten Ausführungsbeispiele sollen die Erfindung, weitere Ausführungsformen und weitere Vorteile näher beschrieben werden.

Es zeigen:
- Fig. 1: einen exemplarischen ersten laminierten Schichtaufbau sowie
- Fig. 2: einen exemplarischen zweiten laminierten Schichtaufbau

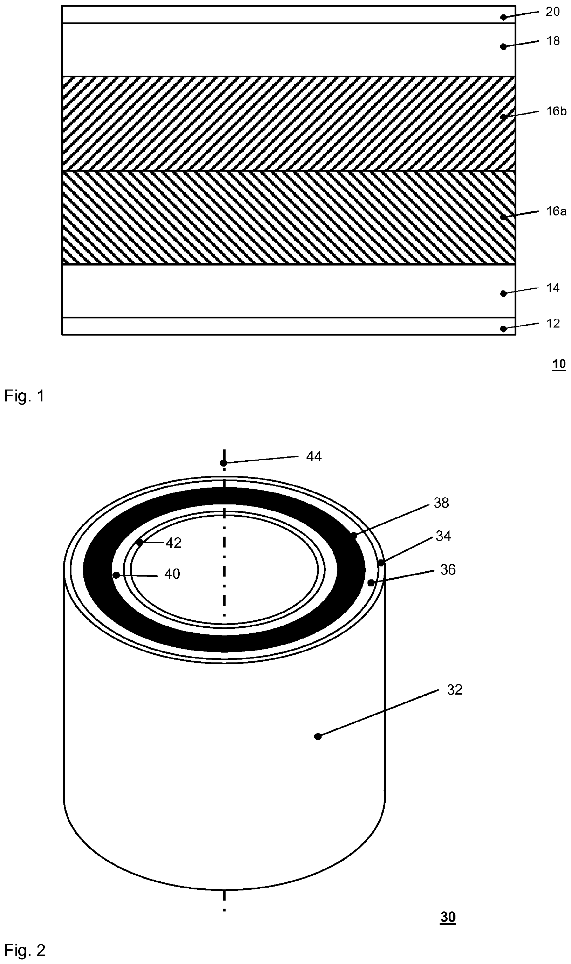

Fig. 1 zeigt einen exemplarischen und nicht maßstabsgetreuen ersten laminierten Schichtaufbau 10 mit einer erfindungsgemäßen Abfolge der Einzelschichten mit den jeweiligen Bezugszeichen:
- 12:: 15µm eines Harzes im B-Zustand, beispielsweise Hexion Epenol 9968-LG
- 14:: 100µm Glasgewebe
- 16a:: 350µm Polyesterfolie, wodurch eine erste Teilschicht der Kernschicht gebildet ist
- 16b:: 350µm Polyesterfolie, wodurch eine zweite Teilschicht der Kernschicht gebildet ist
- 18:: 100µm Glasgewebe
- 20:: 15µm eines Harzes im B-Zustand, beispielsweise Hexion Epenol 9968-LG

Nach einem jeweiligen Erhitzungsvorgang sind die Harzschichten 12, 20 dann zumindest teilweise in die Hohlräume der angrenzenden Glasgewebeschichten 14, 18 eingesaugt und bilden mit diesen einen festen Verbundwerkstoff, welcher durch die vollständige Polymerisation des Harzes bedingt ist.

Fig. 2 zeigt einen exemplarischen zweiten laminierten Schichtaufbau 30, welcher eine um eine Wickelachse 44 angeordnete hohlzylindrische Form 32 aufweist. Auch diese Darstellung ist nicht maßstabsgerecht, zeigt aber auch hier eine erfindungsgemäße Schichtabfolge mit den jeweiligen Bezugsziffern:
- 34:: 15µm eines Harzes im B-Zustand, beispielsweise Albesiano 8045/A
- 36:: 100µm Glasgewebe
- 38:: 700µm Kernschicht aus Polyesterfolie
- 40:: 100µm Glasgewebe
- 42:: 15µm eines Harzes im B-Zustand, beispielsweise Albesiano 8045/A

Selbstverständlich sind die genannten Schichtdicken nur als Richtwerte aufzufassen, welche schon alleine den üblichen Fertigungstoleranzen unterliegen.

### Bezugszeichenliste

- 10: exemplarischer erster laminierter Schichtaufbau
- 12: erste Einzelschicht Harz im B-Zustand
- 14: erste Einzelschicht Glasgewebe
- 16a: erste Polyesterfolienschicht der Kernschicht
- 16b: zweite Polyesterfolienschicht der Kernschicht
- 18: zweite Einzelschicht Glasgewebe
- 20: zweite Einzelschicht Harz im B-Zustand
- 30: exemplarischer zweiter laminierter Schichtaufbau
- 32: hohlzylindrische Form
- 34: erste Einzelschicht Harz im B-Zustand
- 36: erste Einzelschicht Glasgewebe
- 38: Kernschicht
- 40: zweite Einzelschicht Glasgewebe
- 42: zweite Einzelschicht Harz im B-Zustand
- 44: Wickelachse

## Patentansprüche

1. Laminierter Schichtaufbau (10, 30) zur Herstellung eines flächigen Isolationsmaterials, **gekennzeichnet durch** folgende Reihenfolge flächiger und aufeinander angeordneter Einzelschichten:
- Harz im B-Zustand (12, 34)
- Glasgewebe (14, 36)
- Kernschicht aus Polyesterfolie (38, 16a+16b)
- Glasgewebe (18, 40)
- Harz im B-Zustand (42, 20)
wobei die Kernschicht (38) zwei Lagen (16a, 16b) einer ca. 350µm dicken Polyesterfolie aufweist.

2. Laminierter Schichtaufbau nach Anspruch 1, **dadurch gekennzeichnet, dass** das Verhältnis der Dicke einer Harzschicht (12, 20, 34, 42) zur Dicke einer daran angrenzenden Glasgewebeschicht (14, 18, 36, 40) etwa 3:20 beträgt.

3. Laminierter Schichtaufbau nach Anspruch 2, **dadurch gekennzeichnet, dass** die Harzschichten (12, 20, 34, 42) jeweils ca. 15µm Dicke und die Glasgewebeschichten (14, 18, 36, 40) jeweils ca. 100µm Dicke aufweisen.

4. Laminierter Schichtaufbau nach einem der vorherigen Ansprüche, **dadurch gekennzeichnet, dass** das Harz im B-Zustand Phenol-Epoxypräkondensat oder Bisphenol A Harz ist.

5. Laminierter Schichtaufbau nach einem der vorherigen Ansprüche, **dadurch gekennzeichnet, dass** er eine hohlzylindrische Form (32) aufweist.

6. Isolationsmaterial, **dadurch gekennzeichnet, dass** es durch temporäre Erhitzung eines laminierten Schichtaufbaus gemäß den Ansprüchen 1 - 5 auf eine Backtemperatur hergestellt wurde, so dass das Harz vollständig polymerisiert ist.

7. Isolationsmaterial nach Anspruch 6, **dadurch gekennzeichnet, dass** die temporäre Erhitzung auf Backtemperatur in einem Temperaturbereich von 140 °C bis 180 °C für einen Zeitraum von wenigstens 30min erfolgte.

8. Hochspannungswicklung mit einer Unterspannungswicklung, welche hohlzylindrisch um eine Wickelachse (44) angeordnet ist, mit einer Oberspannungswicklung, welche in einem radialen Abstand hohlzylindrisch um dieselbe Wickelachse angeordnet ist, **dadurch gekennzeichnet, dass** in dem durch den radialen Abstand gebildeten Hohlraum ein in der Form angepasster laminierter Schichtaufbau (30) nach einem der Ansprüche 1 bis 5 angeordnet ist.

9. Hochspannungswicklung nach Anspruch 8, **dadurch gekennzeichnet, dass** aus dem laminierten Schichtaufbau durch zuvor erfolgte temporäre Erhitzung der gesamten Wicklung auf eine Backtemperatur ein Isolationsmaterial hergestellt wurde.

## Claims

1. Laminated layer structure (10, 30) for producing a flat insulating material, **characterized by** the following sequence of flat single layers arranged one on top of the other:
- B-stage resin (12, 34),
- glass fabric (14, 36),
- core layer of polyester film (38, 16a+16b),
- glass fabric (18, 40)
- B-stage resin (42, 20),
wherein the core layer (38) comprises two plies (16a, 16b) of a polyester film about 350 µm thick.

2. Laminated layer structure according to Claim 1, **characterized in that** the ratio of the thickness of a resin layer (12, 20, 34, 42) to the thickness of a glass fabric layer (14, 18, 36, 40) adjacent thereto is approximately 3:20.

3. Laminated layer structure according to Claim 2, **characterized in that** the resin layers (12, 20, 34, 42) have in each case a thickness of about 15 µm and the glass fabric layers (14, 18, 36, 40) have in each case a thickness of about 100 µm.

4. Laminated layer structure according to one of the preceding claims, **characterized in that** the B-stage resin is a phenol-epoxy precondensate or a bisphenol A resin.

5. Laminated layer structure according to one of the preceding claims, **characterized in that** it has a hollow-cylindrical form (32).

6. Insulating material, **characterized in that** it was produced by heating a laminated layer structure according to Claims 1 - 5 for a time to a baking temperature, so that the resin is completely polymerized.

7. Insulating material according to Claim 6, **characterized in that** the heating for a time to baking temperature took place within a temperature range from 140°C to 180°C for a period of at least 30 minutes.

8. High-voltage winding, comprising a lower-voltage winding that is arranged in the form of a hollow cylinder around a winding axis (44), with an upper-voltage winding that is arranged in the form of a hollow cylinder at a radial distance around the same winding axis, **characterized in that** a laminated layer structure (30) of an adapted form according to one of Claims 1 to 5 is arranged in the cavity formed by the radial distance.

9. High-voltage winding according to Claim 8, **characterized in that** an insulating material was produced from the laminated layer structure by previously heating the entire winding for a time to a baking temperature.

## Revendications

1. Structure de couches stratifiée (10, 30) pour la fabrication d'un matériau d'isolation plat, **caractérisée par** la succession suivante de couches individuelles plates et superposées :
- une résine à l'état B (12, 34),
- un tissu de verre (14, 36),
- une couche centrale en un film de polyester (38, 16a + 16b),
- un tissu de verre (18, 40),
- une résine à l'état B (42, 20),
la couche centrale (38) comprenant deux couches (16a, 16b) d'un film de polyester d'une épaisseur d'environ 350 µm.

2. Structure de couches stratifiée selon la revendication 1, **caractérisée en ce que** le rapport entre l'épaisseur d'une couche de résine (12, 20, 34, 42) et l'épaisseur d'une couche de tissu de verre (14, 18, 36, 40) adjacente à celle-ci est d'environ 3:20.

3. Structure de couches stratifiée selon la revendication 2, **caractérisée en ce que** les couches de résine (12, 20, 34, 42) présentent chacune une épaisseur d'environ 15 µm et les couches de tissu de verre (14, 18, 36, 40) présentent chacune une épaisseur d'environ 100 µm.

4. Structure de couches stratifiée selon l'une quelconque des revendications précédentes, **caractérisée en ce que** la résine à l'état B est un pré-condensat de phénol-époxy ou une résine de bisphénol A.

5. Structure de couches stratifiée selon l'une quelconque des revendications précédentes, **caractérisée en ce qu'**elle présente une forme cylindrique creuse (32).

6. Matériau d'isolation, **caractérisé en ce qu'**il a été fabriqué par chauffage temporaire d'une structure de couches stratifiée selon les revendications 1 à 5 à une température de cuisson de sorte que la résine soit entièrement polymérisée.

7. Matériau d'isolation selon la revendication 6, **caractérisé en ce que** le chauffage temporaire à une température de cuisson a lieu dans une plage de température allant de 140 °C à 180 °C pendant une durée d'au moins 30 minutes.

8. Enroulement haute tension comprenant un enroulement basse tension, qui est agencé sous forme cylindrique creuse autour d'un axe d'enroulement (44), comprenant un enroulement haute tension, qui est agencé sous forme cylindrique creuse autour du même axe d'enroulement à un écart radial, **caractérisé en ce qu'**une structure en couches stratifiée (30) selon l'une quelconque des revendications 1 à 5 adaptée à la forme est agencée dans la cavité formée par l'écart radial.

9. Enroulement haute tension selon la revendication 8, **caractérisé en ce qu'**un matériau d'isolation a été fabriqué à partir de la structure en couches stratifiée par chauffage temporaire préalable de l'ensemble de l'enroulement à une température de cuisson.
